# EUROPEAN PATENT APPLICATION

(11) **EP 0 743 119 A1**
(43) Date of publication of application: **20.11.1996**
(21) Application number: 96201296.9
(22) Date of filing: 10.05.1996
(51) Int. Cl.: B23B 31/26

(54) **Device for clamping toolholder tapers of varying sizes on a spindle**

(30) Priority: 19.05.1995 IT MI951015
(71) Applicant: H.S.D. s.r.l., I-20036 Meda, Milano (IT)
(72) Inventor: Marelli, Flavio, 20036 Meda (Milano) (IT); Pedroli, Bruno, 25100 Brescia (IT)
(74) Representative: Mittler, Enrico

(57) **Abstract**

A device for clamping a toolholder taper on a spindle comprises: an interchangeable adapter (9;9') mounted on one end of the spindle (6) to hold a taper (10;10') of predefined size; a first bush (20) slidingly housed in the spindle (6) and provided with a first circumferential series of seats (26) housing a first plurality of balls (24) which can be engaged radially with a hooking shank (28) of a first type of taper (10); a second bush (21) slidingly housed in the first bush and provided with a second circumferential series of seats (27) housing a second plurality of balls (25) which can be engaged radially with the shank (28') of a second type of taper (10'); means (19,18,16) of elastically forcing the first bush in a first direction to maintain the first plurality of balls engaged with the shank of the first type of taper; means of engaging striking (61,22,62) of the first bush with the second bush to transmit to the second bush the forcing in the first direction, so as to maintain the second plurality of balls engaged with the shank of the second type of taper; means of pushing (12,13,16) the first bush in a second direction, opposite to the first direction; a first seat (58) in the spindle for housing the first plurality of balls when the first bush is pushed in the second direction, to allow removal of the shank of the first type of taper; a second seat (56), in the first bush, for accomodating the second plurality of balls when the first bush is pushed in the second direction, to allow removal of the shank of the second type of taper.

## Description

The present invention relates to a device for clamping toolholder tapers of varying sizes on a spindle of a machine tool or balancing machine.

It is known that tools for machining are fixed onto toolholder tapers, which are in turn mounted on the spindle shaft of a machine tool or of a machine for balancing the tool-toolholder taper assembly.

For this purpose toolholder tapers are provided with a shank which co-operates with a clamping device connected to the spindle. Known clamping devices are substantially of two types: those with bushes containing balls and those with segment or "petal" collets.

It is also known that there are toolholder tapers of different sizes: for example the toolholder tapers according to the standard ISO 40 are overall twice larger than tapers according to the standard ISO 30.

Traditional clamping devices connected to spindles for machine tools or for balancing machines are dimensioned to clamp toolholder tapers of predefined and fixed sizes, and do not allow toolholder tapers of different sizes to be mounted on the spindle shaft. For example, a clamping device for ISO 40 toolholder tapers does not allow an ISO 30 taper to be clamped and vice versa.

In view of the state of the art described, the object of the present invention is that of providing a clamping device to be connected to a spindle of a machine tool or of a balancing machine, which allows clamping on the spindle itself of toolholder tapers of varying sizes in accordance with different dimensional standards, for example the standards ISO 30 and ISO 40.

In accordance with the present invention, this object is achieved thanks to a device for clamping a toolholder taper on a spindle of a machine tool or balancing machine, characterised in that it comprises:
an adapter interchangeably mounted on one end of the spindle for holding a respective toolholder taper of predefined size fitted with a respective hooking shank;
a first bush slidingly housed in the spindle and provided with a first circumferential series of seats housing a first plurality of balls which can be engaged radially with the hooking shank of a toolholder taper of a first type;
a second bush slidingly housed in the first bush and provided with a second circumferential series of seats housing a second plurality of balls which can be engaged radially with the hooking shank of a toolholder taper of a second type;
elastic forcing means for forcing said first bush in a first direction such as to maintain said first plurality of balls in conditions of engagement with said hooking shank of a toolholder taper of said first type;
means of engaging striking of said first bush with said second bush to transmit to said second bush the forcing of said first elastic forcing means in said first direction, so as to maintain said second plurality of balls in conditions of engagement with said hooking shank of a toolholder taper of said second type;
means of pushing said first bush in a second direction, opposite to said first direction;
a first seat, provided in said spindle, designed to accomodate the first plurality of balls when the first bush is pushed in said second direction, to allow removal of said hooking shank of a toolholder taper of said first type;
a second seat, provided in said first bush, designed to accomodate the second plurality of seats when the first bush is pushed in said second direction, to allow removal of said shank of a toolholder taper of said second type.

The device of the present invention allows clamping on a same spindle, be it of a machine tool or of a balancing machine, of toolholder tapers of different sizes, for example tapers according to the ISO 30 and ISO 40 standards: the balls provided in the first bush clamp the tapers of larger size, and the balls of the second bush clamp the tapers of smaller size.

The features and advantages of the present invention will be made clearer from the following detailed description of one of its embodiments, illustrated by way of a non-limiting example in the accompanying drawings, in which:
Figure 1 is an axially sectioned view of an electric spindle assembly for a balancing machine, wherein the spindle shaft is fitted with a clamping device according to the present invention, with a toolholder taper of ISO 40 standard size mounted;
Figure 2 is a section along line II-II of Figure 1;
Figure 3 is a section along line III-III of Figure 1;
Figures 4-6 show, again in axial section but in a simplified form, the electric spindle assembly of Figure 1 in three different working conditions of a sequence of unclamping of the toolholder taper;
Figure 7 is a section along line VII-VII of Figure 5;
Figure 8 is a section along VIII-VIII of Figure 6;
Figure 9 is an axially sectioned view of the electric spindle assembly of Figure 1, with a toolholder taper of ISO 30 standard size mounted;
Figure 10 is a section along line X-X of Figure 9;
Figures 11-13 show, again in axial section but in a simplified form, the electric spindle assembly of Figure 9 in three different working conditions of a sequence of unclamping of the toolholder taper.

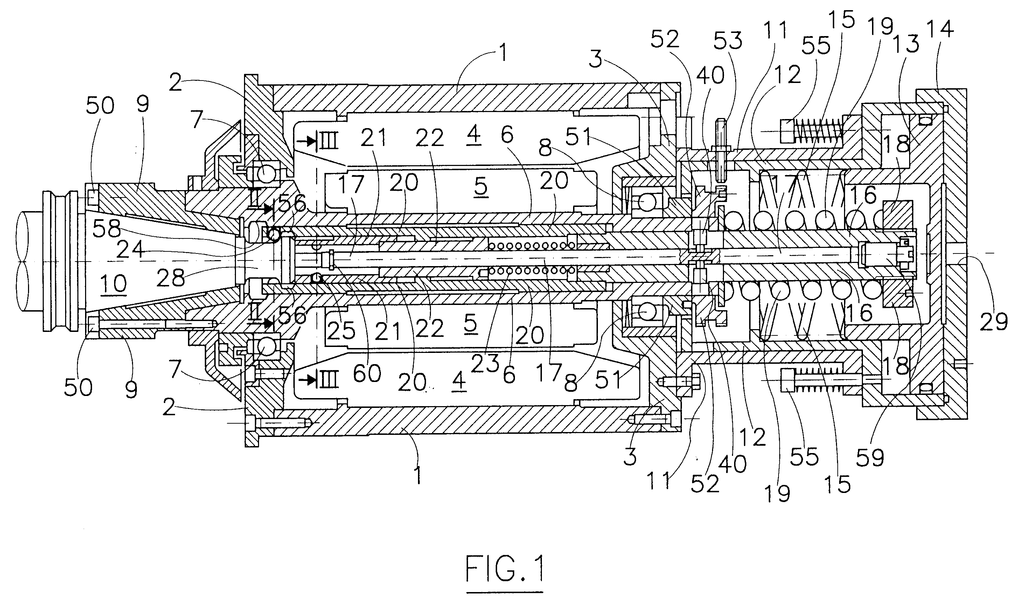

Figure 1 shows in axial section an electric spindle assembly of a machine for balancing tools for machining. This electric spindle assembly also forms the object of a co-pending patent application in the name of the same applicant.

The electric spindle assembly shown comprises a substantially cylindrical casing 1 closed at both ends by a front flange 2 and by a rear flange 3.

Internally the casing 1 houses an electric motor comprising a stator 4, fixed to the internal wall of the casing 1, and a rotor 5 coaxial to the stator 4. The rotor 5 is keyed onto a hollow shaft 6 forming the rotating element or, more properly, spindle shaft. The spindle shaft 6 is held at its ends by flanges 2 and 3, by means of two ball bearings 7 and 8.

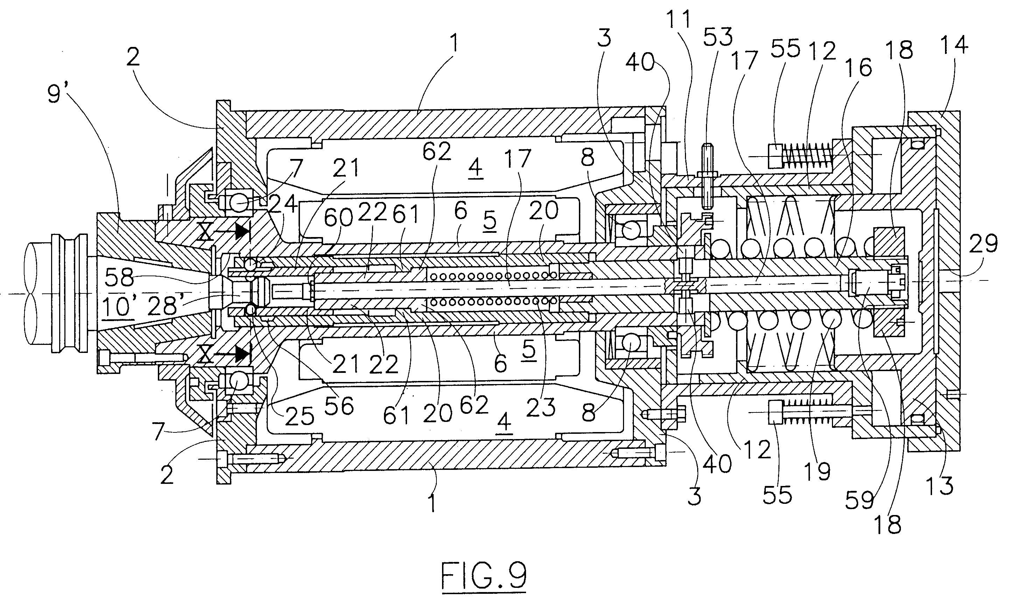

In front of the spindle shaft 6 (that is to say to the left of Figure 1) an adapter 9 is mounted by screws 50 and holds a toolholder taper 10 comprising a shank 28. In Figure 1 the adapter 9 and the toolholder taper 10 have dimensions in accordance with the ISO 40 standard. The adapter 9, being screw-mounted, is interchangeable and may be replaced by an adapter for toolholder tapers of different sizes, for example according to the standard ISO 30 (as in the case of Figure 9, which will be described hereinbelow).

Screwed on the rear threaded end of the spindle shaft 6 is a first ring nut 51, behind the ball bearing 8, and a second ring nut 52 bearing reference notches for a sensor 53. The sensor 53 sends a signal to an electronic control unit (not shown) to determine an angular reference. A further sensor, not shown, provided in the electronic unit, determines unbalancing of the tool to be balanced and the counterweight necessary for restoring balance.

Mounted at the rear flange 3 is a cylindrical sleeve 11 wherein a cylinder 12 is inserted, attached to the sleeve 11 by screws 55. In the cylinder 12, closed at the rear by a sealed cover 14, an internally hollow piston 13 is slidingly housed and which is elastically forced towards the cover 14 by a spiral spring 15.

An internally hollow tension shaft 16 also extends in the cylinder 12 and on whose threaded head a ring nut 18 is screwed. A second spiral spring 19, coaxial to the spring 15, acts on the ring nut 18 forcing the tension shaft 16 towards the head of the piston 13.

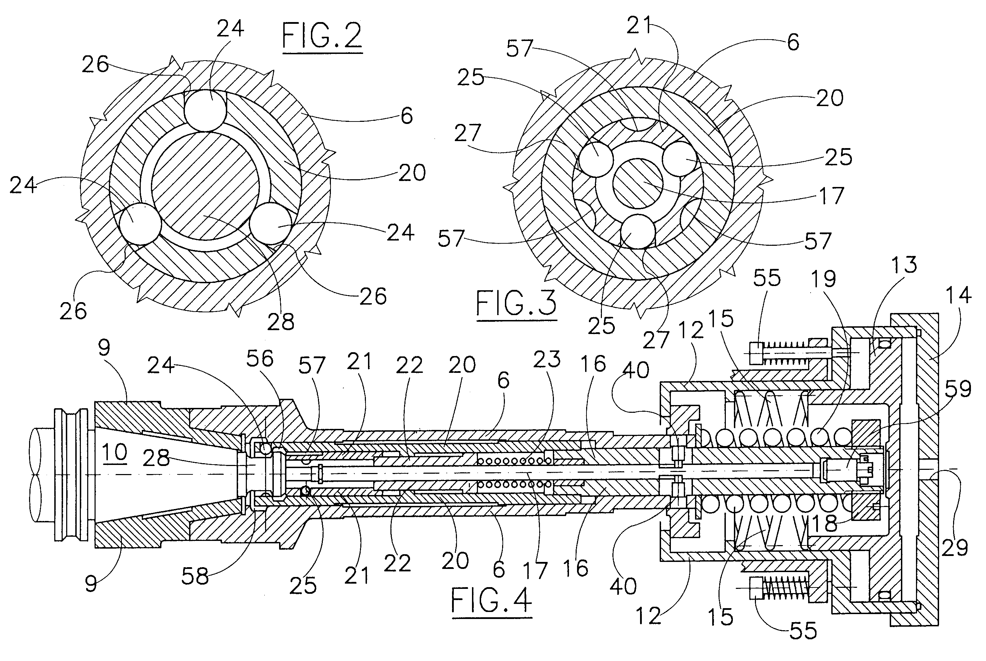

At the opposite end in relation to the ring nut 18, the tension shaft 16 is inserted slidingly in the spindle shaft 6. This end of the tension shaft 16 inserted in the spindle shaft 6 is threaded, and screwed thereon is a first bush 20, slidingly housed in the spindle shaft 6. As can be seen better in Figure 2, the first bush 20 houses, in respective holes 26 placed in circumferential series at 120° one from the other, a first triad of balls 24. The holes 26 have a diameter corresponding to the diameter of the balls 24, but are tapered towards the axis of the spindle shaft 6 so as to allow the balls 24 to project only partially, without allowing them to fall. In the first bush 20, next to the circumferential series of balls 24, an annular groove 56 is also formed. Moreover, an annular groove 58 of sufficient size to hold the balls 24 at least partially is also formed in the spindle 6.

Slidingly housed in the first bush 20 is a second bush 21, screwed on a tie rod 22 elastically forced by a third spiral spring 23 in the direction of the shank 28 of the toolholder taper 10. As can be seen better in Figure 3, the second bush 21 houses, in the respective holes 27 placed in a circumferential series at 120° one in relation to the other and in an intermediate position between the holes of the first bush 20 (that is to say, the two circumferential series of holes are rotated through 60° one in relation to the other), three balls 25 of slightly smaller diameter compared to the balls 24. The holes 27, like the holes 26, also have a diameter corresponding to the diameter of the balls 25, but are tapered towards the axis of the spindle shaft 6 so as to allow the balls 25 to project only partially, without allowing them to fall. Along the external surface of the second bush 21 three axial grooves 57 (Fig. 3) are also formed at 120° one in relation to the other in an intermediate position to the holes 27 (and therefore aligned with the holes 26 in the first bush 20).

Slidingly inserted in the tension shaft 16 is a thrust rod 17, which extends also in the third spiral spring 23, the tie rod 22 and the second bush 21, substantially as far as the end of the shank 28 of the toolholder taper 10. Two pins 40, integral with the spindle shaft 6, engage in respective notches formed in the surface of the thrust rod 17 to prevent the latter from rotating in relation to the spindle shaft, and at the same time prevent it from withdrawing when the toolholder taper is removed. The head of the tension shaft 16 is threaded internally, and a screw 59 engages therein to adjust the stroke of the thrust rod 17.

In the operative condition of Figure 1 the toolholder taper 10 is clamped on the spindle shaft 6: the first bush 20 is drawn towards the rear part of the spindle assembly by the forcing of the spring 19 on the tension shaft 16, and the balls 24, partially projecting from the holes 26, prevent extraction of the widened end of the shank 28. The friction between the external conical surface of the toolholder taper 10 and the internal conical surface of the adapter 9 makes the taper-tool assembly integral with the spindle shaft 6.

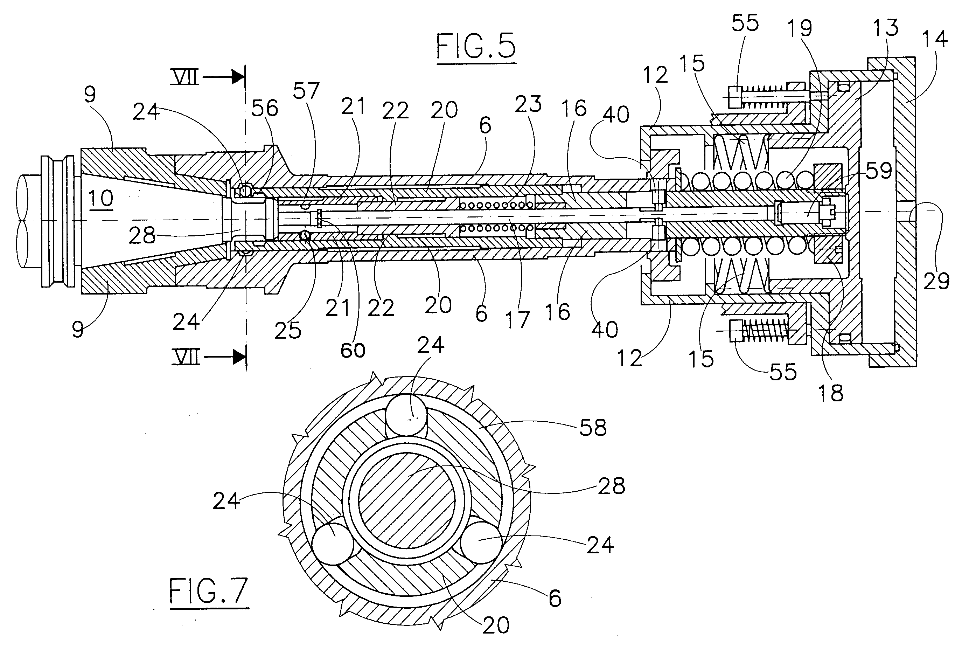

The sequence of unclamping of the toolholder taper is illustrated in Figures 4-6. In order to unclamp the toolholder taper 10 from the spindle 6, pressurised air is fed into the cylinder 12 via a hole 29 in the cover 14. The pressurised air causes the sliding of the piston 13 to the left, overcoming the elastic force of the spring 15. At a certain point the head of the piston 13 mechanically strikes the head of the tension shaft 16, and begins to push the latter to the left, overcoming the elastic force of the spring 19. The sliding towards the left of the tension shaft 16 causes similar sliding of the first bush 20. In the condition shown in Figure 4 the piston 13 has already mechanically struck the head of the tension shaft 16, and the first bush 20 has already partially slid towards the left. The forward movement of the tension shaft 16 also causes compression of the spring 23 which, by means of the tie rod 22, pushes with increasing force the second bush 21 against the end of the shank 28.

When, as shown in Figure 5, following sliding of the first bush 20 the holes 26 are brought to the annular groove 58 in the internal surface of the spindle 6 (Fig. 7), the balls 24 may withdraw into the holes 27, so as not to oppose further the extraction of the widened part of the shank 28. The thrust of the second bush 21 on the shank 28 causes detaching of the surfaces of the taper 10 and of the adapter 9, and the taper 10 may be removed.

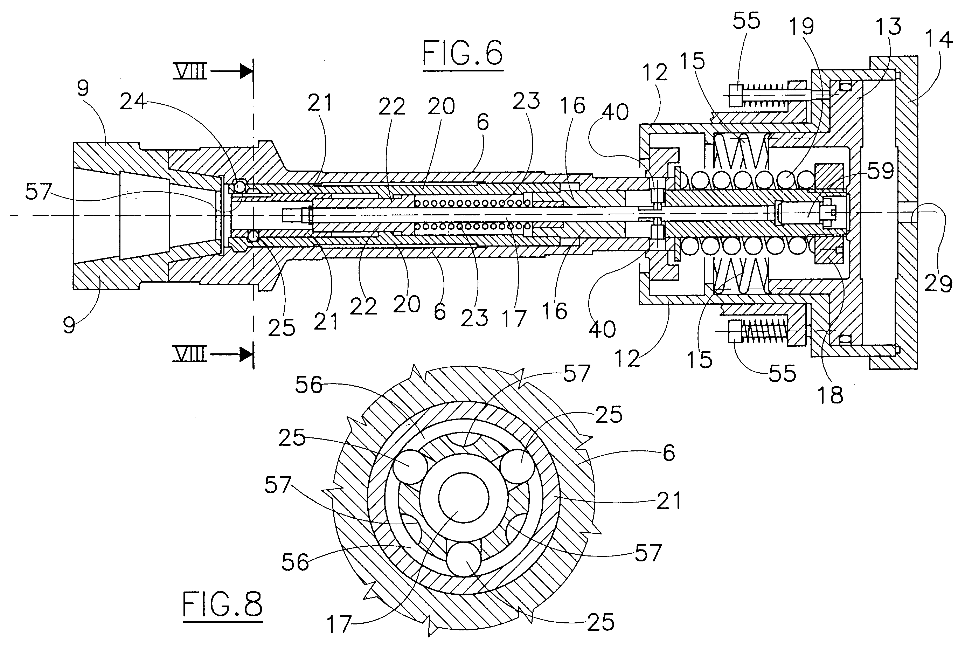

It should be noted that, while the toolholder taper 10 is extracted from the adapter 9, the second bush 21 slides to the left inside the first bush 20 under the thrust of the spring 23, until the tie rod 22 hits mechanically against a ring 60 on the thrust rod 17 (Fig. 6). In this position the holes 27 are aligned with the annular groove 56 and the balls 25 are free to withraw into the holes 27. The balls 27 do not thus hinder the passage of a shank of a new toolholder taper which is to be mounted on the spindle shaft 6.

Figure 9 shows in axial section the same electric spindle as in Figure 1, whereon however a support adapter 9' is mounted for a toolholder taper 10' with size in accordance with the standard ISO 30. This toolholder taper is shorter than the ISO 40 taper, and has a shank 28' which is approximately half the size of the shank 28 of the toolholder taper 10 of Figure 1.

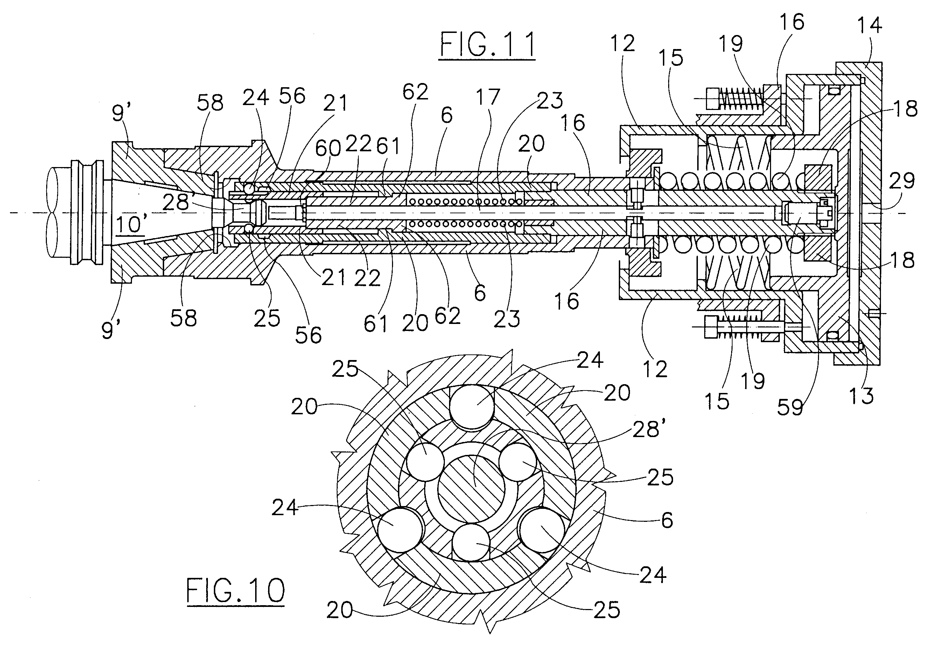

In this case the toolholder taper 10' is clamped by means of the balls 25 of the second bush 21, which project partially from the respective holes 27. Despite the fact that the spring 23 tends to force the tie rod 22 and the second bush 21 to the left in Figure 9, the second bush 21 is forced towards the rear part of the spindle assembly by the action of the first bush 20, which is provided with an annular ridge 61 which engages with a respective annular ridge 62 on the tie rod 22. The first bush 20 is in turn forced towards the rear part of the electric spindle by the action of the spring 19. The balls 24 of the first bush are held by the respective axial grooves 57 in the external surface of the second bush 21 (Fig. 10).

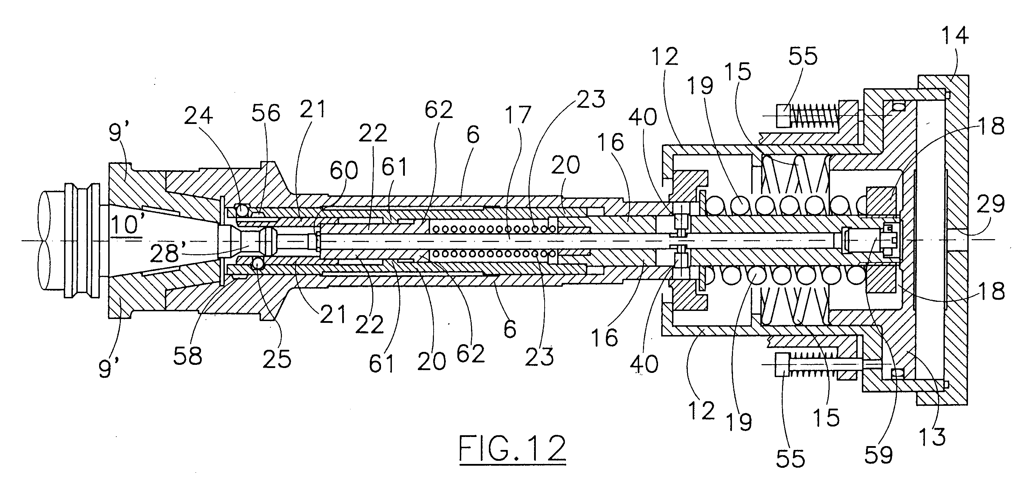

In order to unclamp the toolholder taper 10' pressurised air is fed into the cylinder 12 through the hole 29 as in the previous case. The air causes sliding to the left of the piston 13, until it hits mechanically on the head of the tension shaft 16. Further sliding of the piston 13 causes sliding of the tension shaft 16, and hence that of the first bush 20 (Fig. 11). When the holes 26 in the first bush 20 have moved to the annular groove 58, the holes 27 in the second bush 21 are at the annular groove 56 and the balls 25 can therefore withdraw. At this point the end of the regulation screw 59 reaches the head of the rod 17, which is therefore pushed to the left until it hits against the end of the shank 28' so as to push the latter to cause detachment of the walls of the taper 10' from those of the adapter 9'. The toolholder taper 10' can thus be removed from the spindle shaft 6.

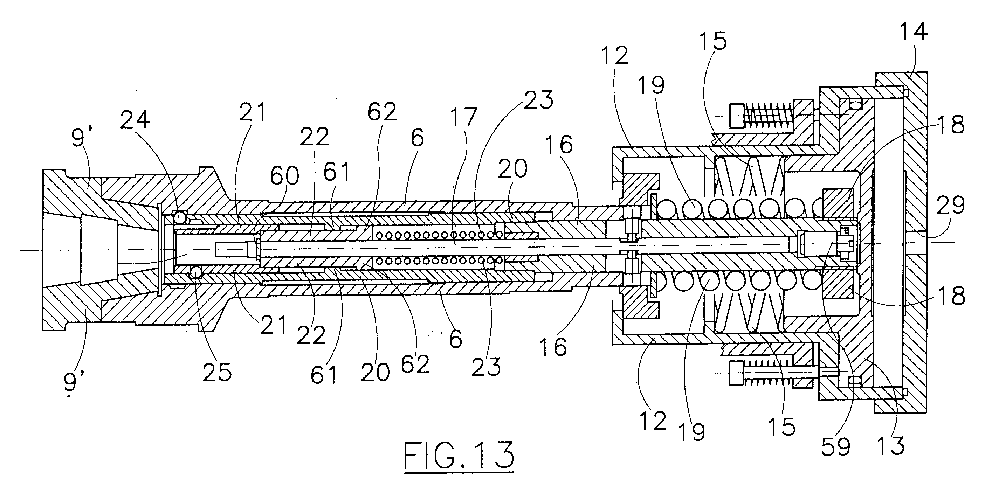

Figure 13 shows the electric spindle after the toolholder taper 10' has been extracted, ready to receive a new toolholder taper.

Even if the accompanying drawings and the relevant description which has been made thereof refer to an electric spindle for a balancing machine, the clamping device of the present invention can clearly also be used in spindle shafts of machine tools. Moreover the reference to toolholder tapers of ISO 30 and ISO 40 standard sizes is purely by way of an example, it being obviously possible, on the basis of the appropriate dimensions of the bushes, to clamp toolholder tapers of different standards.

## Claims

1. Device for clamping a toolholder taper on a spindle of a machine tool or balancing machine, characterised in that it comprises:
an adapter (9;9') interchangeably mounted on one end of the spindle (6) to hold a respective toolholder taper (10;10') of predetermined size and fitted with a respective hooking shank (28;28');
a first bush (20) slidingly housed in the spindle (6) and provided with a first circumferential series of seats (26) housing a first plurality of balls (24) which can be enaged radially with the hooking shank (28) of a toolholder taper (10) of a first type;
a second bush (21) slidingly housed in the first bush (20) and provided with a second circumferential series of seats (27) housing a second plurality of balls (25) which can be engaged radially with the hooking shank (28') of a toolholder taper (10') of a second type;
elastic forcing means (19,18,16) for forcing said first bush (20) in a first direction such as to maintain said first plurality of balls (24) in conditions of engagement with said hooking shank (28) of a toolholder taper (10) of said first type;
means of engaging (61,22,62) striking of said first bush (20) with said second bush (21) to transmit to said second bush (21) the forcing of said first means of elastic forcing (19,18,16) in said first direction, so as to maintain said second plurality of balls (25) in conditions of engagement with said hooking shank (28') of a toolholder taper (10') of said second type;
means of pushing (12,13,16) said first bush (20) in a second direction, opposite to said first direction;
a first seat (58), provided in said spindle (6), suitable for housing the first plurality of balls (24) when the first bush (20) is pushed in said second direction to allow removal of said hooking shank (28) of a toolholder taper (10) of said first type;
a second seat (56), provided in said first bush (20), designed to accomodate the second plurality of balls (25) when the first bush (20) is pushed in said second direction to allow removal of said shank (28') of a toolholder taper (10') of said second type.

2. Device according to claim 1, characterised in that said elastic forcing means (19,18,16) comprise a shaft (16) integral with and forming an axial extension of said first bush (20), and a spiral spring (19) acting on a ring nut (18) screwed onto the head of said shaft (16).

3. Device according to claim 1, characterised in that said thrust means (12,13,16) comprise a cylinder (12) and piston (13) assembly with pneumatic actuation.

4. Device according to claim 1, characterised in that said first plurality of balls comprises three balls (24), housed in respective seats (26) placed along a circumference and equidistanced one from the other.

5. Device according to claim 1, characterised in that said second plurality of balls comprises three balls (25), housed in respective seats (27) placed along a circumference and equidistanced one from the other.

6. Device according to claim 1, characterised in that said first seat is an annular groove (58) provided in the internal surface of the spindle (6).

7. Device according to claim 1, characterised in that said second seat is an annular groove (56) provided in the internal surface of the first bush (20).

8. Device according to claim 1, characterised in that a plurality of axial grooves (57) is provided on the external surface of the second bush (21) to accomodate the balls (24) of the first plurality so as to allow relative sliding of said second bush (21) in relation to the first bush (20) when the first plurality of balls (24) is not housed in said first seat (58).

9. Device according to claim 1, characterised in that it comprises a thrust rod (17) slidingly provided inside said second bush (21) and actuated by said pushing means (12,13,16) to push on the hooking shank (28') of a toolholder taper (10') so as to facilitate extraction thereof.
